# EUROPÄISCHE PATENTSCHRIFT

(11) **EP 0 547 462 B1**
(45) Veröffentlichungstag und Bekanntmachung des Hinweises auf die Patenterteilung: **09.07.1997**
(21) Anmeldenummer: 92120822.9
(22) Anmeldetag: 07.12.1992
(51) Int. Cl.: C08G 18/67, C08G 18/73, C08G 18/75, C09D 175/04

(54) **Verfahren zur Herstellung von Acryloylgruppen enthaltenden, aliphatischen Polyurethanen.**
Process for the production of aliphatic polyurethanes having acryloyl groups .
Procédé de préparation de polyuréthanes aliphatiques contenant des groupes acryloyle.

(30) Priorität: 18.12.1991 DE 4141720
(43) Veröffentlichungstag der Anmeldung: 23.06.1993
(73) Patentinhaber: BAYER AG, 51368 Leverkusen (DE)
(72) Erfinder: Meixner, Jürgen, Dr., W-4150 Krefeld (DE); Fischer, Wolfgang, Dr., W-4005 Meerbusch 3 (DE)

(56) Entgegenhaltungen:
- EP-A- 475 133
- EP-A- 0 168 173
- EP-A- 0 228 854

## Beschreibung

Die vorliegende Erfindung betrifft ein Verfahren zur Herstellung von Acryloylgruppen enthaltenden Polyurethanen, die durch Strahlenhärtung in vernetzte Produkte überführt werden können Sie können z.B. als Bindemittel für Überzugsmassen eingesetzt werden

Acryloylgruppen enthaltende Polyurethane, die, wie sie beispielsweise in der DE-OS 1 644 798, DE-OS 2 115 373 oder DE-OS 2 737 406 beschrieben, als Umsetzungsprodukt von u.a. Polyisocyanaten und Hydroxyalkylacrylaten erhalten werden, sind seit langem bekannt. Sie werden mit Hilfe von energiereichen Strahlen wie UV- oder Elektronenstrahlen gehärtet und dienen zum Beschichten von z.B. Holz oder zur Herstellung von Überzügen zu graphischen Zwecken.

Zur Herstellung der Urethanacrylate können die unterschiedlichsten Polyisocyanate eingesetzt werden. Falls die Herstellung von vergilbungsbeständigen Lackfilmen im Mittelpunkt des Interesses steht, werden zur Herstellung der Urethanacrylate (cyclo)aliphatische Polyisocyanate eingesetzt. Obwohl u.a. in der DE-OS 2 115 373 auch Hexamethylendiisocyanat als geeignetes Ausgangsdiisocyanat erwähnt wird, kann gesagt werden, daß es sich hierbei um eine rein hypothetische Offenbarung handelt, weil dieses preiswerte Diisocyanat in der Praxis wegen der Kristallinität der entstehenden Urethanacrylate, die einer Verwendung als Lackbindemittel entgegen steht, bislang nicht eingesetzt werden können.

In einer eigenen älteren Patentanmeldung (Deutsche Patentanmeldung P 40 27 743.7) werden mit Esteralkoholen modifizierte Urethanacrylate auf Basis Hexamethylendiisocyanat beschrieben, die nach Herstellung bei Raumtemperatur flüssig sind.

Die der Erfindung zugrundeliegende Aufgabe bestand darin, einen weiteren Weg zu Acryloylgruppen enthaltenden, aliphatischen Polyurethanen aufzuzeigen, bei deren Herstellung Hexamethylendiisocyanat (HDI) als wesentliches Ausgangsdiisocyanat zum Einsatz gelangt, und die dennoch auch bei Temperaturen von 0°C flüssig sind und unter UV-Bestrahlung schnell vernetzen.

Diese Aufgabe konnte durch die Bereitstellung des nachstehend näher beschriebenen erfindungsgemäßen Verfahrens zur Herstellung von Acryloylgruppen enthaltenden, aliphatischen Polyurethanen gelöst werden.

Gegenstand der Erfindung ist ein Verfahren zur Herstellung von Acryloylgruppen enthaltenden Polyurethanen, dadurch gekennzeichnet, daß man
a) 0,25 bis 0,5 Mol, vorzugsweise 0,3 bis 0,4 Mol einer Diisocyanat-Komponente, bestehend aus mindestens einem organischen Diisocyanat eines unter 300 liegenden Molekulargewichts mit aliphatisch und/oder cycloaliphatisch gebundenen Isocyanatgruppen mit Ausnahme von Hexamethylendiisocyanat mit
b) 0,2 bis 0,55 Mol, vorzugsweise 0,25 bis 0,5 Mol einer Acryloylgruppen aufweisenden Alkoholkomponente, bestehend aus mindestens einem Acryloylgruppen aufweisenden einwertigen Alkohol des Molekulargewichtsbereichs 116 bis 144 unter Einhaltung eines NCO/OH-Äquivalentverhältnisses bezogen auf die Ausgangskomponenten a) und b) von 1,8:1 bis 2,5:1 umsetzt und nach Zugabe von
c) 0,5 bis 0,75, vorzugsweise 0,6 bis 0,7 Mol Hexamethylendiisocyanat das Gemisch mit
d) 0,1 bis 0,65, vorzugsweise 0,2 bis 0,6 Mol einer Acryloylgruppen aufweisenden Alkoholkomponente, bestehend aus mindestens einem Acryloylgruppen aufweisenden einwertigen Alkohol des Molekulargewichtsbereichs 116 bis 144 und
e) 0,15 bis 0,45, vorzugsweise 0,2 bis 0,4 Mol eines gegebenenfalls Ether- und/oder Estergruppen aufweisenden zweiwertigen Alkohols des Molekulargewichtsbereichs 132 bis 2000 mit verzweigter Struktur
   umsetzt, wobei die Komponenten d) und e) in beliebiger Reihenfolge oder auch als Gemisch zum Einsatz gelangen, und anschließend dieses Gemisch mit
f) 0,1 bis 1,2 Mol, vorzugsweise 0,2 bis 1,1 Mol mindestens eines mindestens dreiwertigen Alkohols des Molekulargewichtsbereichs 92 bis 2000,
   unter Einhaltung eines NCO/OH-Äquivalentverhältnisses, bezogen auf alle Ausgangskomponenten a) bis f), von 0,7:1 bis 1:1 umsetzt.

Die Polyisocyanatkomponente a) besteht aus mindestens einem organischen Diisocyanat mit (cyclo)aliphatisch gebundenen Isocyanatgruppen und einem unter 300 liegenden Molekulargewicht mit Ausnahme von Hexamethylendiisocyanat. In Betracht kommen beispielsweise 1-Isocyanato-3,3,5-trimethyl-5-isocyanatomethyl-cyclohexan (IPDI), 1,6-Diisocyanato-2,2,4-trimethylhexan, 1,4-Diisocyanato-cyclohexan, 1-Methyl-1-isocyanato-3(4)-isocyanatomethyl-cyclohexan oder Gemische derartiger Diisocyanate.

Bei den Komponenten b) und d) handelt es sich um Acryloylgruppen aufweisende einwertige Alkohole bzw. um beliebige Gemische derartiger Alkohole. Hierunter sind vor allem eine freie Hydroxylgruppe aufweisende Ester der Acrylsäure mit zweiwertigen Alkoholen zu verstehen. Die Ester weisen ein Molekulargewicht von 116 bis 144 auf. Beispiele für solche ethylenisch ungesättigte Ester sind Hydroxyethylacrylat, 1-Methyl-2-hydroxyethylacrylat, 2- und 3-Hydroxypropylacrylat, 2-, 3- und 4-Hydroxybutylacrylat.

Die Komponente c) ist Hexamethylendiisocyanat.

Bei der Komponente e) handelt es sich um mindestens einen gegebenenfalls Ether- und/oder Estergruppen aufweisenden zweiwertigen Alkohol des Molekulargewichtsbereichs 132 bis 2000, vorzugsweise 132 bis 1000, mit verzweigter Struktur. Beispiele hierfür sind 2,2-Diethyl-1,3-propandiol, 2-Ethyl-1,3-hexandiol, 2,5-Dimethyl-2,5-hexandiol, 2,2,4-Trimethyl-1,3-pentandiol sowie das Umsetzungsprodukt aus 1 Mol Trimethylolpropan und 1 Mol Formaldehyd (Trimethylolpropanformal).

Zu den Polyolen f) gehören mindestens dreiwertige Alkohole des Molekulargewichtsbereichs 92 bis 2000, wie beispielsweise Glycerin, Trimethylolpropan, Pentaerythrit und/oder Sorbit. Ebenfalls in Betracht kommen Polyetherpolyole, die durch Alkoxylierung von einfachen Alkoholen der beispielhaft genannten Art zugänglich sind, und die Molekulargewichte von bis zu 2000, vorzugsweise bis zu 1000 aufweisen; ferner Esterpolyole des zuletzt genannten Molekulargewichtsbereichs, die durch Umsetzung von mehrwertigen Alkoholen und Säuren oder Anhydriden mehrwertiger Säuren in an sich bekannter Weise zugänglich sind und der genannten Voraussetzung bezüglich der Hydroxylfunktionalität entsprechen.

Die Herstellung der Polyurethane durch Umsetzung der genannten Ausgangskomponenten kann in Substanz oder in gegenüber Isocyanaten inerten Lösungsmitteln, wie beispielsweise Aceton, Ethylacetat, Butylacetat, niedermolekularen Estern der (Meth)Acrylsäuren oder Gemischen derartiger Lösungsmittel erfolgen, wobei vorzugsweise in allen Reaktionsstufen Reaktionstemperaturen von 20 bis 100°C, insbesondere 40 bis 80°C eingehalten werden. Die Mengenverhältnisse der genannten Reaktionspartner werden im Rahmen der oben gemachten Ausführungen vorzugsweise so bemessen, daß, bezogen auf alle Ausgangskomponenten a) bis f), ein NCO/OH-Äquivalentverhältnis von 0,8:1 bis 1:1 vorliegt.

Bei der Durchführung des erfindungsgemäßen Verfahrens wird im allgemeinen darauf geachtet, daß die Umsetzungen der einzelnen Reaktionsstufen weitgehend beendet sind, bevor die weiteren Reaktanten zugesetzt werden. In der Praxis bedeutet dies, daß die Umsetzung zwischen den Komponenten a) und b) innerhalb der genannten Temperaturbereiche bis zum Abklingen der Wärmetönung der exothermen Reaktion durchgeführt wird, bevor die Umsetzung mit dem Komponenten c) bis e) erfolgt, und daß, in völliger Analogie hierzu, die Umsetzung mit den Komponenten c) bis e) weitgehend beendet ist, was sich ebenfalls am Abklingen der Wärmetönung bemerkbar macht, bevor die Komponente f) hinzugegeben wird.

Die Umsetzungen erfolgen vorzugsweise in Gegenwart geeigneter Katalysatoren, wie beispielsweise Zinn(II)octoat, Dibutylzinndilaurat oder tertiären Aminen wie Dimethylbenzylamin.

Als Ergebnis der Umsetzung in der letzten Reaktionsstufe liegen Verfahrensprodukte mit einem unter 0,1 Gew.-% liegenden NCO-Gehalt vor.

Das als Verfahrensprodukt anfallende Urethanacrylat kann andererseits durch Zugabe geeigneter Inhibitoren und Antioxidantien, wie beispielsweise Phenole und/oder Hydrochinone, in Mengen von jeweils 0,001 bis 0,3 Gew.-%, bezogen auf Urethanacrylat, vor vorzeitiger und unerwünschter Polymerisation geschützt werden. Ein gut geeigneter Inhibitor ist beispielsweise das in den Beispielen eingesetzte Phenothiazin. Der Zusatz dieser Hilfsmittel kann vor, gleichzeitig und/oder im Anschluß an die Durchführung des erfindungsgemäßen Verfahrens erfolgen.

Die unter Verwendung der erfindungsgemäßen Produkte hergestellten Lacke können die an sich bekannten Hilfs- und Zusatzmittel der Lacktechnologie enthalten.

Hierzu gehören Füllstoffe, Pigmente, Farbstoffe, Thixotropiermittel, Glättmittel, Mattierungsmittel und Verlaufsmittel, die in üblichen Mengen eingesetzt werden können. Die Acryloylgruppen enthaltenden Polyurethane können auch in an sich bekannten Lacklösungsmitteln gelöst, mit copolymerisierbaren Monomeren abgemischt oder in Wasser emulgiert zum Einsatz gelangen.

Geeignete Lösungsmittel sind beispielsweise Butylacetat, Cyclohexan, Aceton, Toluol oder Gemische derartiger Lösungsmittel.

Beispiele für geeignete copolymerisierbare Monomere sind organische Verbindungen, die mindestens eine copolymerisierbare olefinische Doppelbindung pro Molekül und bei 23°C eine Viskosität von maximal 500 mPa.s aufweisen. Hierzu gehören beispielsweise Styrol, 1,6-Hexandiol-diacrylat, Trimethylolpropantriacrylat oder N-Vinylpyrrolidon.

Die inerten Lösungsmittel und auch die copolymerisierbaren Monomeren können in Mengen von jeweils bis zu 100 Gew.-%, vorzugsweise bis zu 50 Gew.-%, bezogen auf das Gewicht der Acryloylgruppen aufweisenden Polyurethane eingesetzt werden.

Es ist auch möglich, gleichzeitig sowohl inerte Lösungsmittel der beispielhaft genannten Art als auch copolymerisierbare Monomere der beispielhaft genannten Art einzusetzen.

Falls die Acryloylgruppen aufweisenden Polyurethane aus wäßriger Emulsion verarbeitet werden sollen, kann die Herstellung entsprechender wäßriger Emulsionen beispielsweise mit Hilfe externer Emulgatoren und gegebenenfalls üblicher in der Emulsionstechnik angewandter Hilfsmittel erfolgen.

Hierfür geeignete Emulgatoren sind bekannt und z.B. in Ullmanns Encyclopädie der technischen Chemie, Bd. 10, 4. Auflage, Kap. Emulsionen, S. 449 ff. beschrieben.

Bevorzugte Emulgatoen sind copolymerisierbare Acryloylgruppen enthaltende Polyurethanemulgatoren, wie sie in der DE-OS 39 00 257 beschrieben sind.

Die wäßrigen Emulsionen enthalten im allgemeinen 10 bis 70 Gew.-%, vorzugsweise 30 bis 70 Gew.-% der erfindungsgemäßen Acryloylgruppen aufweisenden Polyurethane. Die Herstellung der Emulsionen kann durch Einrühren von Wasser in das Gemisch aus erfindungsgemäßem Polyurethanacrylat und Emulgator z.B. durch einfaches Rühren oder mittels Dissolver erfolgen.

Zur Ausbildung einer feinteiligen Emulsion, d.h. zur besseren Einbringung der Scherkräfte ist portionsweiser Wasserzusatz bei Temperaturen unter 30°C vorteilhaft. Bei optimaler Scherung werden Öl-in-Wasser-Emulsionen gebildet.

Bei allen Varianten der Verwendung erfolgt die Aushärtung, gegebenenfalls nach Verdunsten von flüchtigen Hilfsmitteln wie inerte Lösungsmittel oder Wasser, mittels energiereicher Strahlung, wie UV-Licht, Elektronen- oder Gammastrahlen.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in Houben-Weyl, Methoden der organischen Chemie, Band E 20, Seite 80 ff., Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 2-Hydroxy-2-methyl-1-phenyl-1-propan-1-on.

Die erwähnten Fotoinitiatoren, die je nach Verwendungszweck der erfindungsgemäßen Produkte in Mengen zwischen 0,1 bis 10 Gew.-%, vorzugsweise 0,1 bis 5 Gew.-%, bezogen auf das Gewicht der erfindungsgemäßen Verfahrensprodukte eingesetzt werden, können als einzelne Substanz oder, wegen häufiger vorteilhafter synergistischer Effekte, auch in Kombination miteinander verwendet werden.

Die unter Verwendung der erfindungsgemäßen Verfahrensprodukte als Bindemittel hergestellten Überzugsmassen bzw. Lacke eignen sich zur Beschichtung der unterschiedlichsten Substrate, wie z.B. Papier, Kartonage, Leder, Holz, Kunststoffe, Vlies, Textilien, keramische Materialien, mineralische Materialien, Glas, Metall, Kunstleder, fotografische Materialien, wie z.B. mit fotografischer Schicht versehenes Papier.

Die nachfolgenden Beispiele dienen der weiteren Erläuterung der Erfindung. Alle Prozentangaben beziehen sich auf Gewichtsprozente.

### Beispiele 1 bis 5 (erfindungsgemäß)

Die in Tabelle 1 genannte Menge an Komponente a) wird zusammen mit 0,02 % Dibutylzinndilaurat und 0,01 % Phenothiazin in Butylacetat gelöst (in einer Menge, daß nach Herstellung ein Festkörpergehalt von 80 % vorliegt) und unter Durchleiten von Luft auf 50°C erwärmt. Dann wird die in Tabelle 1 genannte Menge an Komponente b) unter Rühren zugetropft und durch Kühlen eine maximale Reaktionstemperatur von 60°C aufrechterhalten, bis die Bildung des Umsetzungsproduktes aus a) und b) weitgehend abgeschlossen ist, was sich am Abklingen der Wärmetönung bemerkbar macht. Anschließend wird die in der Tabelle genannte Menge an Komponente c) hinzugefügt und in das Gemisch nacheinander die in der Tabelle genannten Komponenten d) und e) unter Rühren eingetropft, wobei durch Kühlen eine maximale Reaktionstemperatur von 60°C aufrechterhalten wird. Nach Abklingen der Wärmetönung wird schließlich die Komponente f) unter Rühren zugetropft und die Reaktion bei 60°C fortgeführt, bis der NCO-Gehalt des Reaktionsgemisches auf unter 0,1 % abgesunken ist.

### Beispiele 6 bis 8 (Vergleichsbeispiele)

Die ebenfalls in der nachstehenden Tabelle zusammengefaßten Vergleichsbeispiele 6 bis 8 wurden in Analogie zu den erfindungsgemäßen Beispielen 1 bis 5 durchgeführt.

In Vergleichsbeispiel 6 wurde eine nicht erfindungsgemäße Menge an Komponente e), in Vergleichsbeispiel 7 eine nicht erfindungsgemäße Menge an Komponente a) eingesetzt. Vergleichsbeispiel 8 zeigt, daß der Einsatz von nicht verzweigten Alkoholen als Komponente e) zu kristallinen Endprodukten führt.

| | Beispiele | | | | | Vergleichsbeispiele | | |
|---|---|---|---|---|---|---|---|---|
| | 1 | 2 | 3 | 4 | 5 | 6 | 7 | 8 |
| Einwaage (Mol) | | | | | | | | |
| Komponente a) | | | | | | | | |
| Isophorondiisocyanat | 0,3 | 0,3 | 0,3 | 0,3 | 0,3 | 0,3 | 0,2 | 0,3 |

| Komponente b) | | | | | | | | |
|---|---|---|---|---|---|---|---|---|
| Hydroxyethylacrylat | 0,3 | 0,3 | 0,3 | 0,3 | 0,3 | 0,3 | 0,2 | 0,3 |

| Komponente c) | | | | | | | | |
|---|---|---|---|---|---|---|---|---|
| Hexamethylendiisocyanat | 0,7 | 0,7 | 0,7 | 0,7 | 0,7 | 0,7 | 0,8 | 0,7 |

| Komponente d) | | | | | | | | |
|---|---|---|---|---|---|---|---|---|
| Hydroxyethylacrylat | 0,5 | 0,4 | 0,4 | 0,5 | 0,4 | 0,6 | 0,6 | 0,5 |

| Komponente e) | | | | | | | | |
|---|---|---|---|---|---|---|---|---|
| Trimethylolpropanformal | 0,2 | | | | 0,3 | 0,1 | 0,2 | |
| 2-Ethyl-1,3-hexandiol | | 0,2 | | | | | | |
| 2,2,4-Trimethyl-1,3- | | 0,2 | | | | | | |
| pentandiol | | | 0,2 | | | | | |
| 2,2-Diethyl-1,3-propandiol | | | | 0,2 | | | | |
| Benzylalkohol | | | | | | | | 0,2 |

| Komponente f) | | | | | | | | |
|---|---|---|---|---|---|---|---|---|
| Trimethylolpropan | 0,33 | 0,3 | 0,3 | 0,27 | | 0,33 | 0,33 | 0,33 |
| 4-fach ethoxyliertes Trimethylolpropan | | | | | 0,33 | | | |
| Aussehen bei 0° C: | klar, flüssig | | | | | krist. | krist. | krist. |

### Vergleichsbeispiel 9

Beispiel 1 wurde wiederholt mit der Änderung, daß Komponente a) und c) vorgelegt wurden und dann die Komponenten b) und d) zusammen zugegeben wurden. Es entstand ein Produkt, das bei 5°C auskristallisierte.

### Vergleichsbeispiel 10

Beispiel 1 wurde wiederholt mit der Änderung, daß die Komponente c) vorgelegt wurde, dann die Komponende d) und dann erst Komponenten a) und b) nacheinander zugegeben wurde. Wiederum entstand ein bei 5°C kristallines Produkt.

### Verwendungsbeispiele

Die Produkte der erfindungsgemäßen Beispiele 1 bis 5 werden mit n-Butylacetat auf eine Verarbeitungsviskosität von ca. 50 Sekunden (DIN-Becher-4-mm, 23°C) eingestellt und mit jeweils 5 % Benzophenon (berechnet auf 100 %iges Urethanacrylat) versetzt. Nach Auftragen der Lackfilme auf Karton (10 µm Auftragsstärke) werden diese unter einem Hanoviastrahler (80 W/cm, 10 cm Abstand) durchbewegt. Bei mindestens 10 m/min Bandgeschwindigkeit entstanden lösemittel- und kratzfeste Überzüge.

"Lösemittelfest" bedeutet in diesem Fall, daß der Lackfilm nach mindestens 20 Doppelhüben mit einem in Butylacetat getränkten Tuch noch einwandfrei aussieht.

## Patentansprüche

1. Verfahren zur Herstellung von Acryloylgruppen enthaltenden Polyurethanen, dadurch gekennzeichnet, daß man
a) 0,25 bis 0,5 Mol einer Diisocyanat-Komponente, bestehend aus mindestens einem organischen Diisocyanat eines unter 300 liegenden Molekulargewichts mit aliphatisch und/oder cycloaliphatisch gebundenen Isocyanatgruppen mit Ausnahme von Hexamethylendiisocyanat mit
b) 0,2 bis 0,55 Mol einer Acryloylgruppen aufweisenden Alkoholkomponente, bestehend aus mindestens einem Acryloylgruppen aufweisenden einwertigen Alkohol des Molekulargewichtsbereichs 116 bis 144 unter Einhaltung eines NCO/OH-Äquivalentverhältnisses bezogen auf die Ausgangskomponenten a) und b) von 1,8:1 bis 2,5:1 umsetzt und nach Zugabe von
c) 0,5 bis 0,75 Mol Hexamethylendiisocyanat das Gemisch mit
d) 0,1 bis 0,65 Mol einer Acryloylgruppen aufweisenden Alkoholkomponente, bestehend aus mindestens einem Acryloylgruppen aufweisenden einwertigen Alkohol des Molekulargewichtsbereichs 116 bis 144 und
e) 0,15 bis 0,45 Mol eines gegebenenfalls Ether- und/oder Estergruppen aufweisenden zweiwertigen Alkohols des Molekulargewichtsbereichs 132 bis 2000 mit verzweigter Struktur
umsetzt, wobei die Komponenten d) und e) in beliebiger Reihenfolge oder auch als Gemisch zum Einsatz gelangen, und anschließend dieses Gemisch mit
f) 0,1 bis 1,2 Mol Mol mindestens eines mindestens dreiwertigen Alkohols des Molekulargewichtsbereichs 92 bis 2000,
unter Einhaltung eines NCO/OH-Äquivalentverhältnisses, bezogen auf alle Ausgangskomponenten a) bis f), von 0,7:1 bis 1:1 umsetzt.

2. Verfahren gemaß Anspruch 1, dadurch gekennzeichnet, daß man 0,3 bis 0,4 Mol der Komponente a), 0,25 bis 0,5 Mol der Komponente b), 0,6 bis 0,7 Mol der Komponente c), 0,2 bis 0,6 Mol der Komponente d), 0,2 bis 0,4 Mol der Komponente e) und 0,2 bis 1,1 Mol der Komponente f) verwendet.

## Claims

1. A process for the preparation of polyurethanes containing acryloyl groups, characterised in that
a) 0.25 to 0.5 mol of a diisocyanate component consisting of at least one organic diisocyanate having a molecular weight below 300 and containing aliphatically and/or cycloaliphatically bonded isocyanate groups, with the exception of hexamethylene diisocyanate,
is reacted with
b) 0.2 to 0.55 mol of an alcohol component containing acryloyl groups, consisting of at least one monohydric alcohol containing acryloyl groups and having a molecular weight of 116 to 144, an NCO:OH equivalent ratio of 1.8:1 to 2.5:1, based on starting components a) and b), being maintained, and
after the addition of
c) 0.5 to 0.75 mol hexamethylene diisocyanate,
the mixture is reacted with
d) 0.1 to 0.65 mol of an alcohol component containing acryloyl groups, consisting of at least one monohydric alcohol containing acryloyl groups and having a molecular weight 116 to 144 and
e) 0.15 to 0.45 mol of a dihydric alcohol having a molecular weight in the range of 132 to 2000 and having a branched structure and optionally containing ether groups and/or ester groups,
components d) and e) being used in any order or even as a mixture,
and this mixture is subsequently reacted with
f) 0.1 to 1.2 mol of at least one at least trihydric alcohol having a molecular weight in the range of 92 to 2000,
an NCO:OH equivalent ratio of 0.7:1 to 1:1, based on all the starting components a) and f), being maintained.

2. A process according to claim 1, characterised in that 0.3 to 0.4 mol of component a), 0.25 to 0.5 mol of component b), 0.6 to 0.7 mol of component c), 0.2 to 0.6 mol of component d), 0.2 to 0.4 mol of component e) and 0.2 to 1.1 mol of component f) are used.

## Revendications

1. Procédé de préparation de polyuréthannes contenant des groupes acryloyle, caractérisé en ce que l'on fait réagir
a) 0,25 à 0,5 mol d'un composant diisocyanate consistant en au moins un diisocyanate organique de poids moléculaire inférieur à 300, à groupes isocyanates à liaisons aliphatiques et/ou cycloaliphatiques, à l'exception de l'hexaméthylènediisocyanate, avec
b) 0,2 à 0,55 moi d'un composant alcool contenant des groupes acryloyle et qui consiste en au moins un alcool monovalent à groupes acloyle de poids moléculaire 116 à 144, en respectant un rapport de 1,8:1 à 2,5:1 entre les équivalents de NCO et les équivalents d'OH des composants de départ a) et b), et après addition de
c) 0,5 à 0,75 mol d'hexaméthylènediisocyanate, on fait réagir le mélange avec
d) 0,1 à 0,65 moi d'un composant alcool contenant des groupes acryloyle et consistant en au moins un alcool à groupes acryloyle de poids moléculaire 116 à 144 et
e) 0,15 à 0,45 mol d'un alcool divalent contenant le cas échéant des groupes éther et/ou ester, de poids moléculaire 132 à 2 000, à structure ramifiée,
les composants d) et e) étant mis en oeuvre dans un ordre quelconque ou encore à l'état de mélange entre eux,
puis on fait réagir ce mélange avec
f) 0,1 à 1,2 mol d'au moins un alcool au moins trivalent de poids moléculaire 92 à 2 000,
en respectant un rapport de 0,7:1 à 1:1 entre les équivalents de groupes NCO et les équivalents de groupes OH pour tous les composants de départ a) à f).

2. Procédé selon la revendication 1, caractérisé en ce que l'on utilise de 0,3 à 0,4 moi du composant a), de 0,25 à 0,5 mol du composant b), de 0,6 à 0,7 mol du composant c), de 0,2 à 0,6 mol du composant d), de 0,2 à 0,4 mol du composant e) et de 0,2 à 1,1 mol du composant f).
